# EUROPEAN PATENT APPLICATION

(11) **EP 4 819 085 A1**
(43) Date of publication of application: **07.10.2026**
(21) Application number: 26167958.3
(22) Date of filing: 26.03.2026
(51) Int. Cl.: G07F 17/32, G07F 17/42

(54) **PRODUCT PROVIDING DEVICE, PROGRAM, AND PRODUCT PROVIDING SYSTEM**

(30) Priority: 31.03.2025 JP 2025057868
(71) Applicant: Bandai Co., Ltd., Tokyo 111-8081 (JP)
(72) Inventor: SAKASAI, Satoshi, Tokyo, 108-0073 (JP); ENDO, Fumitaka, Tokyo, 108-0073 (JP); WATANABE, Ryuya, Tokyo, 108-0073 (JP); INOUE, Ryo, Tokyo, 108-0073 (JP); KUROIWA, Miyu, Tokyo, 108-0073 (JP); KIRYU, Konosuke, Tokyo, 108-0073 (JP); HARAGUCHI, Kanoko, Tokyo, 108-0073 (JP); MIYAMOTO, Chikako, Tokyo, 108-0075 (JP); UGAWA, Shinnosuke, Tokyo, 108-0073 (JP); WATANABE, Riko, Tokyo, 108-0073 (JP); KIMURA, Miyuki, Tokyo, 108-0073 (JP); KURIHARA, Chinami, Tokyo, 108-0073 (JP)
(74) Representative: Studio Torta S.p.A.

(57) **Abstract**

(Problem to be solved) To notify a user of an inventory status of products and the like at an appropriate timing.

(Solution) Provided is a product providing device capable of communicating with a terminal of a user. The product providing device includes: a first-type option presentation means which presents, to a terminal, a plurality of first-type options each associated with a product group composed of a plurality of products, to be selectable by a user; and an inventory management means which manages an inventory status of products of a product group associated with each first-type option of a plurality of first-type options. The first-type option presentation means confirms an inventory status of products of a product group associated with the first-type option and presents the inventory status of products for each screen transition.

## Description

### BACKGROUND

### 1. TECHNICAL FIELD

The present invention relates to a product providing device, a program, and a product providing system.

### 2. RELATED ART

Conventionally, there is a product providing system of an online lottery format (for example, Patent Document 1). In a case of such an online lottery format, unlike an option such as a tangible lottery box or lottery ticket, a user cannot occupy an option.

### RELATED ART DOCUMENTS

### PATENT DOCUMENT

Patent Document 1: Japanese Patent Application Publication No. 2005-070937

Therefore, an issue was to notify the user of an inventory status of products and the like at an appropriate timing.

In this regard, the present invention provides a product providing device, a program, and a product providing system capable of notifying an user of an inventory status of products and the like at an appropriate timing.

### SUMMARY

A product providing device according to an aspect of the present invention is capable of communicating with a terminal of a user. The product providing device includes a first-type option presentation means which presents, to a terminal, a plurality of first-type options each associated with a product group composed of a plurality of products, to be selectable by a user. The product providing device includes an inventory management means which manages an inventory status of products of a product group associated with each first-type option of the plurality of first-type options. The first-type option presentation means confirms an inventory status of products of a product group associated with the first-type option and presents the inventory status of products for each screen transition.

In the product providing device described above, the first-type option presentation means may present a screen after a transition on condition of an operation by the user.

In any product providing device described above, the transition of the screen may be at least one of a transition to a presentation screen for the plurality of first-type options by the first-type option presentation means or a screen transition due to selection of any of the plurality of first-type options by a user.

In any product providing device described above, when presentation of the first-type option is divided into a plurality of screens, the first-type option presentation means may confirm an inventory status of products of a product group associated with the first-type option and presents the inventory status of products for each transition of the screens.

In any product providing device described above, the first-type option presentation means may enable selection of one first-type option only for one user. The first-type option presentation means may present each first-type option in any one mode of a selectable state, a selected state, or a non-selectable state. The first-type option presentation means may present a selected first-type option in a mode of the selected state until selection of the first-type option is released.

In any product providing device described above, the first-type option presentation means may present a first-type option in a mode of the selectable state or the selected state on condition that at least one of a plurality of second-type options associated with the first-type option is selectable. The first-type option presentation means may present the first-type option in a mode of the non-selectable state on condition that all of the plurality of second-type options associated with the first-type option are non-selectable.

In any product providing device described above, regarding a first-type option presented in a mode of the selected state, the first-type option presentation means may perform control to enable a user to wait for selection of the first-type option, so that the user is able to select the first-type option with priority after selection of the first-type option is released. Regarding a first-type option presented in a mode of the selected state, upon transitioning to a waiting screen due to a user selecting to wait for the first-type option, the first-type option presentation means may confirm an inventory status of products of a product group associated with the first-type option and presents the inventory status of products.

Any product providing device described above may include a second-type option presentation means which presents, to the terminal, a plurality of second-type options associated with a first-type option selected by a user among the plurality of first-type options, to be selectable by the user. Upon transitioning to a presentation screen for the plurality of second-type options, the second-type option presentation means may confirm an inventory status of products associated with the second-type options, and present the second-type options reflecting the inventory status.

In any product providing device described above, upon transitioning to a selection screen for a selection quantity of the second-type options, the second-type option presentation means may confirm an inventory status of products associated with the second-type options and present the selection screen reflecting the inventory status.

In any product providing device described above, the second-type option presentation means may release selection of the first-type option on condition that payment corresponding to the selection quantity of the second-type options on the selection screen has been completed.

Any product providing device described above may include a product providing means which presents, to the terminal, product information of a product associated with a second-type option selected by a user.

In any product providing device described above, the first-type option may be an image imitating a lottery box.

In any product providing device described above, the second-type option may be an image imitating a lottery ticket.

A program according to an aspect of the present invention causes a computer to function as: a first-type option presentation means which presents, to a terminal, a plurality of first-type options each associated with a product group composed of a plurality of products, to be selectable by a user; and an inventory management means which manages an inventory status of products of a product group associated with each first-type option of the plurality of first-type options. The first-type option presentation means confirms an inventory status of products of a product group associated with the first-type option and presents the inventory status of products for each screen transition.

A product providing system according to an aspect of the present invention includes a first-type option presentation means which presents, to a terminal, a plurality of first-type options each associated with a product group composed of a plurality of products, to be selectable by a user. The product providing system includes an inventory management means which manages an inventory status of products of a product group associated with each first-type option of the plurality of first-type options. The first-type option presentation means confirms an inventory status of products of a product group associated with the first-type option and presents the inventory status of products for each screen transition.

### EFFECT OF THE INVENTION

According to the present invention, it is possible to notify the user of the inventory status of products and the like at an appropriate timing.

### BRIEF DESCRIPTION OF THE DRAWINGS

Fig. 1 is a diagram for describing a product providing method applied to the present embodiment.
Fig. 2 is a schematic diagram of a product providing system according to the present embodiment.
Fig. 3 is a diagram illustrating a device configuration example of a tablet computer which is an example of a terminal 2.
Fig. 4 is a block diagram illustrating a functional configuration example of a product providing device 1.
Fig. 5 is a diagram illustrating an example of an inventory database D1.
Fig. 6 is a block diagram illustrating a functional configuration example of the terminal 2.
Fig. 7 is a sequence diagram between the product providing device 1 and the terminal 2.
Fig. 8 is an operation flowchart of first-type option presentation processing of the product providing device 1.
Fig. 9 is an example of a purchasable title list screen presented on the terminal 2.
Fig. 10 is an example of a lottery box list screen presented on the terminal 2.
Fig. 11 is an example of product information of a lottery box 1 presented on the terminal 2 when a user selects the lottery box 1.
Fig. 12 is an operation flowchart of waiting processing (Step 118).
Fig. 13 is an example of the product information on a waiting screen for the lottery box 1 presented to the user who has selected to wait.
Fig. 14 is an operation flowchart of second-type option presentation processing of the product providing device 1.
Fig. 15 is an example of a lottery ticket purchase screen displayed on the terminal 2.
Fig. 16 is an example of a lottery ticket list screen for a selected lottery box displayed on the terminal 2.
Fig. 17 is an example of a payment processing completion screen.
Fig. 18 is an example of a lottery ticket opening screen displayed on the terminal 2.
Fig. 19 is a diagram illustrating an example of the inventory database D1 according to a modification of the embodiment of the present invention.
Fig. 20 is an example of a bonus product provision screen displayed on the terminal 2 by a product providing unit 115.

### DESCRIPTION OF EXEMPLARY EMBODIMENTS

### <Embodiment of Present Invention>

A first embodiment of the present invention will be described.

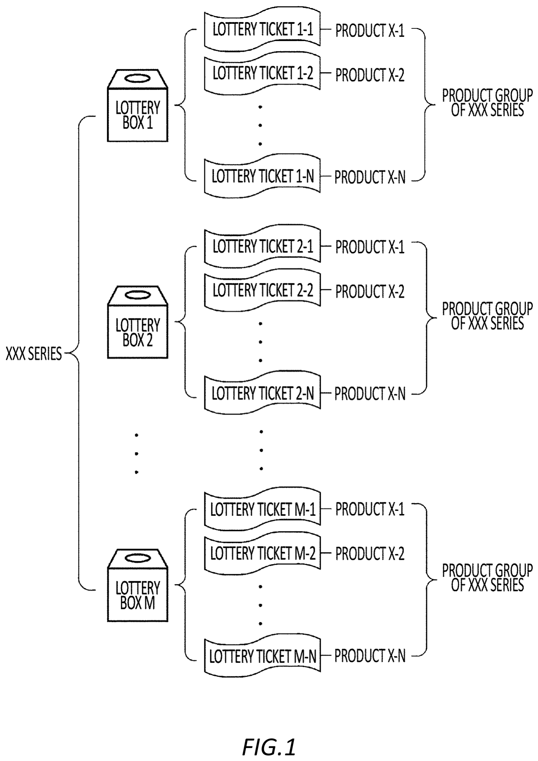

First, in order to facilitate understanding of a configuration of the present embodiment, a product providing method applied to the present embodiment will be described. Fig. 1 is a diagram for explaining the product providing method applied to the present embodiment.

The product providing method applied to the present embodiment provides a product through a draw from a plurality of types of products belonging to a title selected by a user. The title is a name of a certain character or event or the like. The product to be provided may be electronic data such as an image and music, or may be a physical article such as a toy, stationery, a model, clothing, and a daily necessity. In addition, the physical article may be a combination of articles of different types such as a toy, stationery, a model, clothing, and a daily necessity. In following description, a case will be described in which a physical article is provided by delivery.

In addition, provided products may be products of different types as long as they have a same title (series). For example, the provided products may be provided in different forms, such as electronic data and a physical article, as long as they are grouped in advance as a series based on works having a same world view in animation, movies, comics, games, or the like, or a common point between products. In following description, a case will be described in which the provided products are a plurality of types of physical articles.

One title is associated with a plurality of first-type options, and each of the plurality of first-type options is associated with a plurality of second-type options. Each of the first-type options is associated with a product group including N products of P types associated with the title. Then, each of the plurality of second-type options associated with each first-type option is associated with any one product in the product group associated with the first-type option.

More specifically, with reference to Fig. 1, the first-type option is a lottery box, and the second-type option is a lottery ticket contained in the lottery box. Then, there is one title "XXX series", and each of a plurality of lottery boxes 1 to M associated with the title "XXX series" is associated with one product group. A number of product types belonging to each product group is P, each product group is composed of a total of N products of P types, and the products in each product group are identical in type and quantity. A ratio of quantities of products belonging to one product group is determined by prize grades set for respective product types. That is, the quantity of products is smaller as a rank of the prize grade of the products is higher, and the quantity of products is larger as the rank of the prize grade of the products is lower. For example, when "product X-1" of a product group of "XXX series" is set as a first prize grade, "product X-2" is set as a second prize grade, ..., and "product X-P" is set as a P-th prize grade, a probability of winning increases in order of "product X-1", "product X-2", ..., and "product X-P". That is, a probability of winning the "product X-1" is the lowest, and its quantity is the smallest. A probability of winning the "product X-P" is the highest, and its quantity is the largest.

Here, in Fig. 1, a case will be described in which M = 10, N = 100, and P = 5.

The title "XXX series" is associated with ten lottery boxes 1 to 10, and each of the lottery boxes 1 to 10 is associated with 100 lottery tickets 1 to 100. There are five types of products in one product group associated with each of the lottery boxes 1 to 10, that is, "product X-1" to "product X-5", where the first prize grade is "product X-1", the second prize grade is "product X-2", the third prize grade is "product X-3", the fourth prize grade is "product X-4", and the fifth prize grade is "product X-5", a breakdown of their quantities is 2 units of "product X-1", 8 units of "product X-2", 20 units of "product X-3", 30 units of "product X-4", and 40 units of "product X-5", and a total quantity thereof is 100. That is, each product group of 4 types and 100 products is associated with each of the lottery boxes 1 to 10.

Further, each of the lottery tickets 1 to 100 of each of the lottery boxes 1 to 10 is associated with any of 100 products of the product group associated with the lottery box. The lottery tickets 1 to 100 and the products are associated on a one-to-one basis without duplication. At this time, it is preferable that the association between the lottery tickets 1 to 100 of each of the lottery boxes 1 to 10 and the products is not identical and varies for each lottery box. This is to prevent the user from figuring out a correspondence relationship between the lottery ticket and the product while the user repeats selection of the lottery ticket.

Next, provision of a product to the user will be described. The user selects a title they intend to purchase, and selects one lottery box of the plurality of lottery boxes 1 to 10 associated with the title. Here, it is assumed that the user selects the lottery box 5. The user selects a desired quantity of lottery ticket(s) from lottery tickets 5-1 to 5-100 associated with the lottery box 5. Then, a product(s) associated with the lottery ticket(s) selected by the user is provided. The lottery ticket(s) which has been selected by the user and for which the product(s) has been provided is set to be non-selectable by another user. Then, the inventory of the product(s) associated with the selected lottery ticket(s) becomes zero.

In this way, provision of a product associated with a title is achieved by a lottery method in which the user makes their own selection.

Here, an issue is an inventory status of products of the product group associated with the lottery box. In order to increase a possibility of acquiring a desired product, the user attempts to select a lottery box having a large inventory for the desired product. Therefore, it is necessary to correctly notify the user of the inventory status of products of each lottery box at an appropriate timing. Here, the inventory status is a remaining quantity of lottery tickets (a quantity of remaining products) in the lottery box, an inventory quantity for each type of product, and the like. Hereinafter, a product providing device system according to the present embodiment that solves such an issue will be described.

### (Overall configuration)

A product providing device system according to the present embodiment will be described.

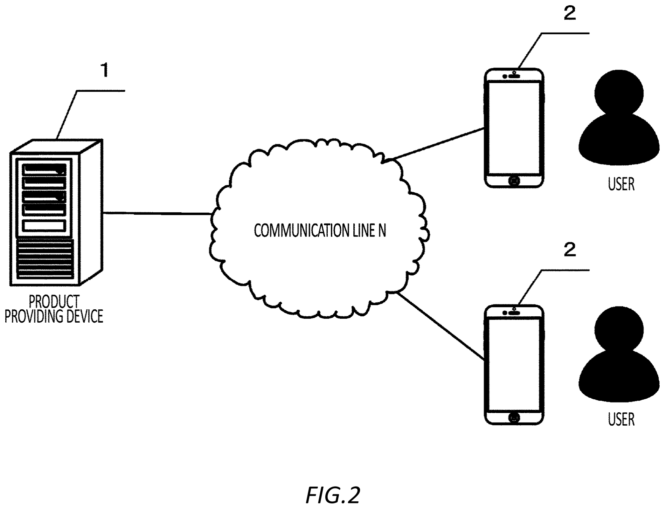

Fig. 2 is a schematic diagram of a product providing system according to the present embodiment. In Fig. 2, reference numeral 1 denotes a product providing device, and reference numeral 2 denotes a terminal of a user.

The product providing device 1 and the terminal 2 of the user can be connected to a communication line N and can communicate with each other. The communication line N means a communication path capable of data communication. That is, the communication line N includes a communication network such as a telephone communication network, a cable network, and the Internet in addition to a LAN by a dedicated line (dedicated cable), Ethernet (registered trademark), or the like for direct connection, and a communication method may be wired or wireless.

The product providing device 1 is a server system including a single server device or a plurality of server devices, a storage device, and the like. The product providing device 1 performs various services for providing a product to a user, acquires an inventory status of products, and the like, and performs a procedure for providing the product to the user, and the like. In the present embodiment, the product is a product to be provided to the user when the user pays monetary consideration. The product is embodied and expressed as a tangible product or the like. For example, the product is a molded object such as a figure having an appearance of a certain character, clothing, a plastic model, an accessory, and the like, but is not limited thereto.

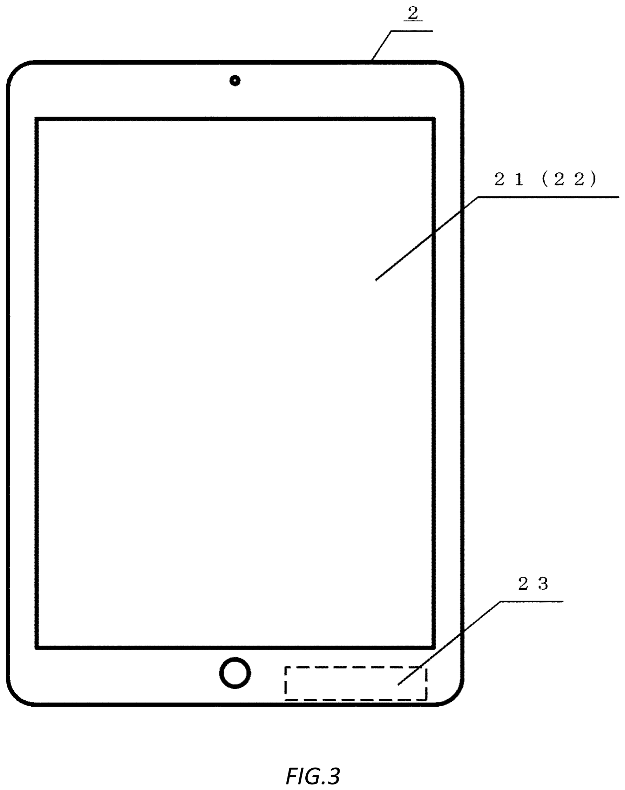

The terminal 2 is, for example, a personal computer, a tablet computer, a smartphone, a mobile phone, or the like. Fig. 3 is a diagram illustrating a device configuration example of a tablet computer which is an example of the terminal 2. As illustrated in Fig. 3, the terminal 2 includes a display 21, a touch operation panel 22 integrated with the display 21, and a built-in speaker 23. In addition, the terminal 2 is provided with a control board, a built-in battery, a power button, a volume adjustment button, and the like which are not illustrated.

Various microprocessors such as a CPU, a GPU, and a DSP, various IC memories such as an ASIC, a VRAM, a RAM, and a ROM, a wireless communication module for wirelessly communicating with a base station, and the like are mounted on the control board. In addition, a so-called I/F circuit (interface circuit), such as a driver circuit of the touch operation panel 22, and the like is mounted on the control board. Each element mounted on the control board is individually connected electrically via a bus circuit or the like, and is connected so as to be able to read and write data and transmit and receive a signal.

### (Functional configuration)

A configuration of each device will be described.

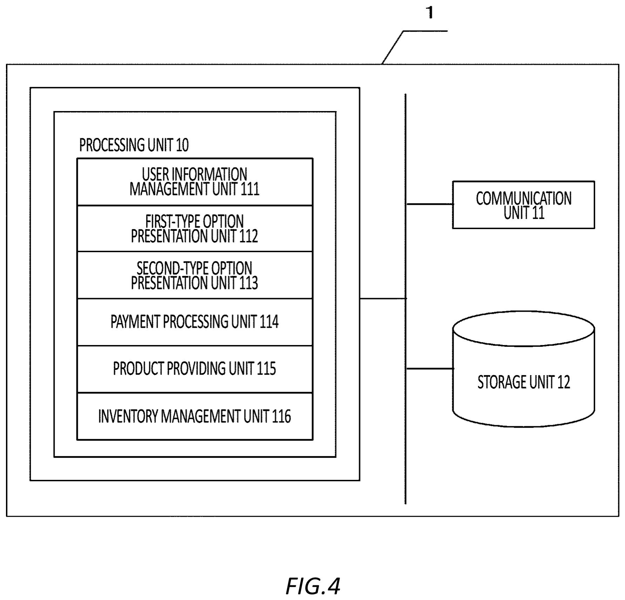

First, a configuration of the product providing device 1 will be described. Fig. 4 is a block diagram illustrating a functional configuration example of the product providing device 1. As illustrated in Fig. 4, the product providing device 1 includes a processing unit 10, a communication unit 11, and a storage unit 12.

The processing unit 10 comprehensively controls an operation of the product providing device 1 based on a program and data stored in the storage unit 12. A function of the processing unit 10 can be implemented by, for example, a microprocessor such as a CPU or a GPU, or an electronic component such as an ASIC or an IC memory. The processing unit 10 includes, as main functional units, a user information management unit 111, a first-type option presentation unit 112, a second-type option presentation unit 113, a payment processing unit 114, a product providing unit 115, and an inventory management unit 116.

The user information management unit 111 manages user information by using a user information database. The user information includes identification information (user ID) and a password of the user for a purchase service, personal information of the user such as a name and an address, product purchase history information of the user, and the like.

The first-type option presentation unit 112 refers to the inventory database D1 and presents, to the terminal 2, a purchasable title list screen and a lottery box list screen. In the present embodiment, one title is associated with a plurality of first-type options, and each of the plurality of first-type options is associated with a plurality of second-type options. Each of the first-type options is associated with a product group including N products of P types associated with the title. Then, each of the plurality of second-type options associated with each first-type option is associated with any one product in the product group associated with the first-type option. In the present embodiment, the first-type option is a lottery box, and the second-type option is a lottery ticket.

The first-type option presentation unit 112 refers to the inventory database D1, confirms a remaining quantity of lottery tickets associated with the lottery box and a current inventory status of products associated with the lottery box and the lottery tickets, and presents, to the terminal 2, a lottery box list screen including the current inventory status.

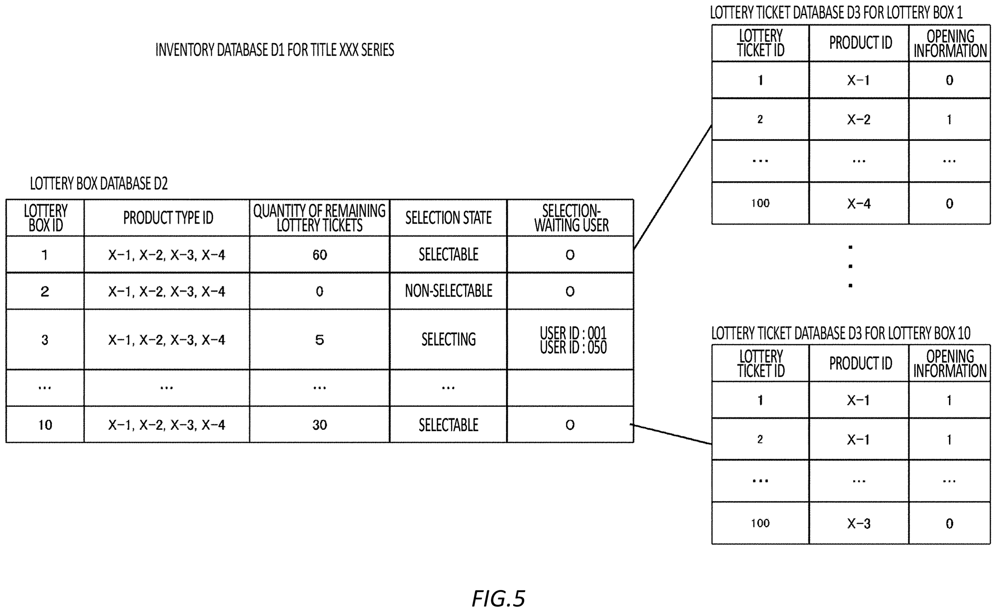

Here, the inventory database D1 will be described. Fig. 5 is a diagram illustrating an example of the inventory database D1. The inventory database D1 is prepared for each title, and the inventory database D1 of Fig. 5 is an example of the inventory database D1 in the title XXX series. The inventory database D1 includes a lottery box database D2 and a lottery ticket database D3.

In the lottery box database D2, one record is prepared for each lottery box, and the one record includes a lottery box ID (identification information) of the lottery box, a product type ID (identification information) for types of products included in the lottery box, a quantity of remaining lottery tickets in the lottery box, selection state information of the lottery box, and a selection-waiting user. The selection state information of the lottery box describes any of a selectable state, a selected state, and a non-selectable state. The selectable state is a state in which the user can select the presented lottery box. The selected state is a state in which another user is selecting the lottery box, and when selection (holding) of that user is released, the lottery box can be selected. The non-selectable state is a state in which a quantity of remaining lottery tickets associated with the lottery box is zero (all lottery tickets have been selected (opened)), and is a state in which the lottery tickets of the lottery box are non-selectable. As will be described later, the selection-waiting user is a user who waits for release of selection of a lottery box being selected.

As illustrated in Fig. 5, in the lottery ticket database D3, one lottery ticket database D3 is associated with one lottery box. In one lottery ticket database D3, one record is prepared for each lottery ticket, and the one record includes a lottery ticket ID (identification information) of the lottery ticket, a product ID (identification information) of a product associated with the lottery ticket ID, and opening information of the lottery ticket. The opening information of the lottery ticket includes an opened state in which the lottery ticket has been opened to the user and a product associated with that lottery ticket has been provided, and an unopened state in which the lottery ticket has not been opened to the user and the product associated with that lottery ticket has not yet been provided. In the opened state, "1" is assigned, and in the unopened state, "0" is assigned. That is, in the opened state, the product associated with that lottery ticket has no available inventory, and in the unopened state, the product associated with that lottery ticket has available inventory.

The first-type option presentation unit 112 receives selection of a title by the user, refers to the lottery box database D2 associated with the title, acquires lottery box information including the lottery box ID and a quantity of remaining lottery tickets in its lottery box (inventory information of the lottery ticket), generates a lottery box list screen including an image of each lottery box and the quantity of remaining lottery tickets in each lottery box, and presents the lottery box list screen to the terminal 2.

Every time transition of the lottery box list screen is performed in the terminal 2, the first-type option presentation unit 112 refers to the lottery ticket database D3, acquires a current inventory status of products of the selected lottery box, and presents product information of the selected lottery box. The product information is a type of a product in the lottery box and a quantity of remaining lottery tickets for each product type. Note that, as described above, in the present embodiment, since a lottery ticket and a product are associated on a one-to-one basis, a quantity of remaining lottery tickets for each product type is the same as a quantity of remaining products (inventory quantity) for each product type.

In addition, the first-type option presentation unit 112 updates a selection state of the lottery box database D2 to "selected" every time the user selects any of lottery boxes on the lottery box list screen. A reason for this is that, if a lottery box is made selectable by a plurality of users in a duplicate manner, a lottery ticket of that lottery box can also be selected by the users in a duplicate manner, and inventory of a product associated with the lottery ticket cannot be accurately managed. On the other hand, if a user is allowed to select a lottery box for a long time, another user cannot select the lottery box. In this regard, the first-type option presentation unit 112 measures a time T1 from selection of a lottery box by a user to purchase decision of a lottery ticket of that lottery box, and when the time T1 exceeds a predetermined TX, forcibly releases the selection of the lottery box, transitions to the selectable state, and updates the selection state of that lottery box in the lottery box database D2 to "selectable".

Further, for a lottery box having the selection state of "selected", the first-type option presentation unit 112 can control a user to be in a waiting state so that the user is able to select that lottery box with priority if selection of the lottery box is released. In this case, the first-type option presentation unit 112 records the user ID of that user as the selection-waiting user for that lottery box in the lottery box database D2. Then, when the selection state of that lottery box has become "selectable", at the time of transitioning a screen for the lottery box to "selectable", the first-type option presentation unit 112 refers to the lottery ticket database D3, acquires a current inventory status of products of the lottery box that has become "selectable", and presents current product information of the lottery box to the terminal 2 of the user. Note that, when there are a plurality of waiting users, the current product information may be presented only to an earliest user, or the current product information may be presented to all the waiting users.

In this manner, for each transition of the screen related to the first-type option (lottery box), the first-type option presentation unit 112 confirms the inventory database D1 (the lottery box database D2 or the lottery ticket database D3) and presents a latest inventory status of products of the first-type option lottery box) to the user. As described above, the transition of the screen related to the first-type option (lottery box) includes at least a transition of a lottery box list screen over a plurality of pages, a transition to a product information presentation screen upon selection of a lottery box, and a transition to a product information presentation screen for a lottery box, which has changed from selected to selectable, for a waiting user of the lottery box.

Note that, in the present embodiment, a lottery box (first-type option) is selected by the user, but a configuration is made such that the user can select either manual selection or automatic selection, and when the automatic selection is selected, the first-type option presentation unit 112 may be able to automatically select the lottery box (first-type option) in the selectable state through a draw. In this case, as product information of the automatically selected lottery box, the latest product information is acquired similarly to the manual selection described above.

The second-type option presentation unit 113 controls presentation of a plurality of second-type options to the terminal 2. In the present embodiment, the second-type option is a lottery ticket. The second-type option presentation unit 113 first presents a lottery ticket purchase screen for reserving a purchase quantity, causes the user to decide a quantity of lottery tickets to be purchased, and then presents a lottery ticket list screen including a plurality of lottery tickets to the terminal 2. When presenting the lottery ticket purchase screen, the second-type option presentation unit 113 counts a quantity of at least one lottery ticket having opening information of "0" in the lottery ticket database D3, and includes a remaining quantity of at least one selectable lottery ticket in the lottery ticket purchase screen.

Further, when generating the lottery ticket list screen after the quantity of lottery tickets to be purchased is decided, the second-type option presentation unit 113 refers to the lottery ticket database D3 and acquires the latest lottery ticket information of the selected lottery box. The lottery ticket information to be acquired includes a lottery ticket ID and opening information of the lottery ticket. The second-type option presentation unit 113 generates, based on the lottery ticket information, a lottery ticket list screen such that the opened or unopened state is identifiable and presents an opened lottery ticket in a mode that is not selectable by the user.

In addition, similarly to the lottery box, if a user is allowed to select a lottery ticket for a long time, another user cannot select the lottery box. In this regard, the second-type option presentation unit 113 measures a time T2 from presentation of a purchase screen for a lottery ticket to completion of payment for purchase of the lottery ticket, and when the time T2 exceeds a predetermined TY, forcibly releases the selection of the lottery ticket and also releases the selection of the lottery box. Then, the second-type option presentation unit 113 updates the selection state of the lottery box to the selectable state in the lottery box database D2.

Note that, regarding a relationship between a time TX and a time TY, it is preferable that the time TY is longer than the time TX, considering that it takes more time to select the lottery ticket.

In addition, in the present embodiment, a lottery ticket (second-type option) is selected by the user, but a configuration is made such that the user can select either manual selection or automatic selection, and when the automatic selection is selected, the second-type option presentation unit 113 may be able to automatically select a lottery ticket from unopened lottery tickets (second-type options) through a draw.

The payment processing unit 114 performs payment processing for a lottery ticket for which purchase reservation has been made. The payment processing is performed after the user confirms selection of the lottery ticket on the lottery ticket list screen.

Here, when the payment processing by the payment processing unit 114 is completed, the second-type option presentation unit 113 updates the selection state of that lottery box in the lottery box database D2 from selected to selectable. In this way, by performing the payment after a type of a product associated with the selected lottery ticket is confirmed and a type of a product to be provided to the user is confirmed, the lottery box can be transitioned from the selected state to the selectable state without waiting for a time required for product provision, such as its subsequent opening animation of the lottery ticket.

The product providing unit 115 presents a lottery ticket opening screen. When the user selects a lottery ticket to be opened, product information such as a product image of a product associated with the opened lottery ticket is presented. In addition, the product providing unit 115 performs a shipping procedure of the product provided to the user. As a delivery destination address, an address registered in the user information database is selected.

After the payment processing by the payment processing unit 114 is completed, the inventory management unit 116 receives the lottery ticket ID of the selected lottery ticket from the second-type option presentation unit 113, and updates, from "0" to "1", the opening information in the lottery ticket database D3 for the received lottery ticket ID. Further, the inventory management unit 116 counts a quantity of at least one lottery ticket having opening information of "0" in the lottery ticket database D3, and updates the quantity of remaining lottery tickets in the lottery box database D2 for the lottery box. Accordingly, the inventory database D1 reflects the latest product status.

The communication unit 11 is connected to the communication line N to implement communication.

The storage unit 12 stores a system program and a functional program. The system program is a program for implementing a basic function of the product providing device 1 as a computer. The functional program is a program for causing the processing unit 10 to function as the user information management unit 111, the first-type option presentation unit 112, the second-type option presentation unit 113, the payment processing unit 114, the product providing unit 115, and the inventory management unit 116 as main functional units. In addition, the storage unit 12 also stores the inventory database D1 (the lottery box database D2 and the lottery ticket database D3) for each title.

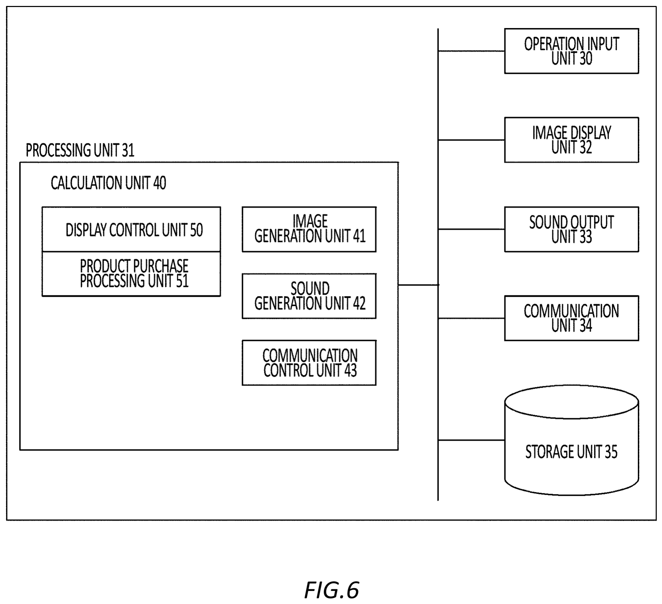

Next, a configuration of the terminal 2 will be described. Fig. 6 is a block diagram illustrating a functional configuration example of the terminal 2.

As illustrated in Fig. 6, the terminal 2 includes an operation input unit 30, a processing unit 31, an image display unit 32, a sound output unit 33, a communication unit 34, and a storage unit 35.

The operation input unit 30 is for inputting various operations of the user, and outputs, to the processing unit 31, an operation input signal corresponding to an operation input. A function of the operation input unit 30 can be implemented by, for example, not only an element directly operated by the user with a finger, such as a touch operation pad, a home button, a button switch, a joystick, or a trackball, but also an element that detects motion or posture, such as an acceleration sensor, an angular velocity sensor, an inclination sensor, or a geomagnetic sensor. In Fig. 2, the touch operation panel 22 corresponds to this.

The processing unit 31 comprehensively controls an operation of the terminal 2 based on the program and data stored in the storage unit 35, the operation input signal from the operation input unit 30, and the like. A function of the processing unit 31 can be implemented by, for example, a microprocessor such as a CPU or a GPU, or an electronic component such as an ASIC or an IC memory. The processing unit 31 includes, as main functional units, a calculation unit 40, an image generation unit 41, a sound generation unit 42, and a communication control unit 43.

The calculation unit 40 executes various types of processing for purchasing a product, and outputs the result to the image generation unit 41, the sound generation unit 42, and the communication control unit 43. The calculation unit 40 includes a display control unit 50 and a product purchase processing unit 51.

The display control unit 50 performs display, animation, and the like of a product purchase screen for products by using information provided from the product providing device 1 and user operation information.

The product purchase processing unit 51 performs a product purchase procedure. Specifically, the purchase processing for the product is performed with the product providing device 1.

The image generation unit 41 generates one image in one frame time (for example, 1/60 seconds) based on a processing result of the calculation unit 40, and outputs the generated image signal to the image display unit 32. A function of the image generation unit 41 can be implemented by, for example, a processor such as a GPU or a digital signal processor (DSP), a program such as a video signal IC or a video codec, an IC memory for a drawing frame such as a frame buffer, an IC memory used for developing texture data, or the like.

The sound generation unit 42 generates a sound signal such as a sound effect and various operation sounds based on the processing result of the calculation unit 40, and outputs the sound signal to the sound output unit 33. A function of the sound generation unit 42 can be implemented by, for example, a processor such as a digital signal processor (DSP) or an audio synthesis IC, an audio codec capable of reproducing an audio file, or the like.

The communication control unit 43 performs communication connection and data processing for data communication with the product providing device 1.

The image display unit 32 displays a screen based on the image signal input from the image generation unit 41. A function of the image display unit 32 can be implemented by, for example, a display device such as a flat panel display, a cathode ray tube (CRT), a projector, or a head mounted display. In Fig. 2, the image display unit 32 corresponds to the display 21.

The sound output unit 33 outputs a sound effect or the like based on the sound signal input from the sound generation unit 42. In Fig. 2, the sound output unit 33 corresponds to the speaker 23.

The communication unit 34 is connected to the communication line N to implement communication. A function of the communication unit 34 can be implemented by, for example, a wireless communication device, a modem, a terminal adapter (TA), a jack of a wired communication cable, a control circuit, or the like.

In the storage unit 35, a program for operating the terminal 2 and implementing various functions included in the terminal 2, data used during execution of the program, and the like are stored in advance, or temporarily stored each time processing is performed. The storage unit 35 can be implemented by, for example, an IC memory such as a RAM, a ROM, or a flash memory, a magnetic disk such as a hard disk, an optical disk such as a CD-ROM or a DVD, or the like. Specifically, the storage unit 35 stores a system program and a control program for controlling purchase processing of an article (product) 3 by the terminal 2. The system program is a program for implementing a basic function of the terminal 2 as a computer. The control program is a program for causing the calculation unit 40 to function as the display control unit 50 and the product purchase processing unit 51.

### (Description of operation)

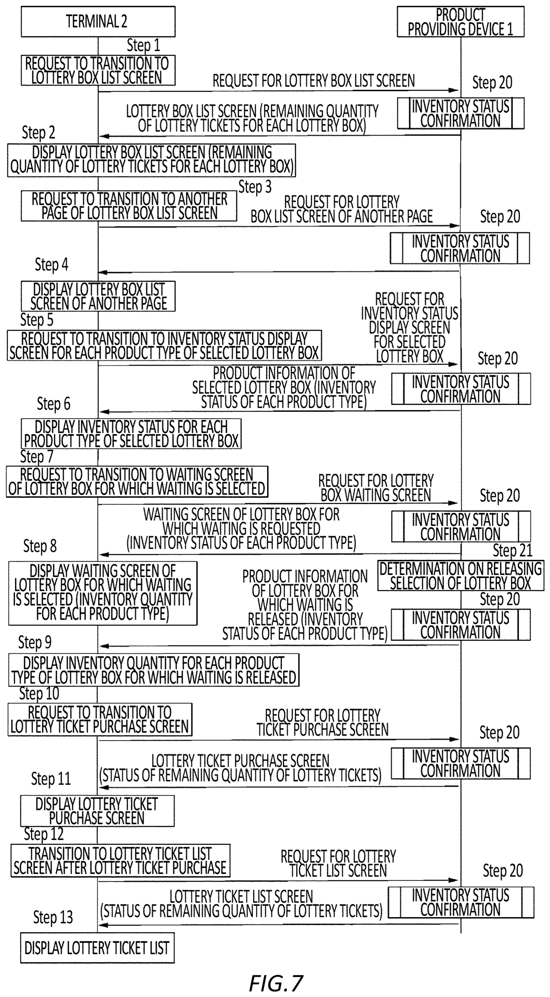

An operation of the product providing system according to the present embodiment will be described focusing on an operation of product providing device 1. First, an example of a screen transition, which is a timing for confirming the inventory status of the lottery box, will be described with reference to a sequence diagram between the product providing device 1 and the terminal 2 in Fig. 7.

Events in which the product providing device 1 confirms the inventory status of products include at least following timings.
1. In response to a request to transition to the lottery box list screen (title selection) from the terminal 2 (Step 1), the product providing device 1 confirms the inventory status of products (Step 20), and presents the lottery box list screen including the remaining quantity of lottery tickets for each lottery box (Step 2).
2. When the lottery box list screen extends over a plurality of pages, if the screen transitions to the lottery box list screen of another page (Step 2), the product providing device 1 confirms the inventory status of products (Step 20), and presents the lottery box list screen including the remaining quantity of lottery tickets for each lottery box as a transition destination (Step 11).
3. When a lottery box selection request is made from the terminal 2 and the screen transitions to the screen with the product information (the inventory quantity for each product type) of the selected lottery box (Step 5), the product providing device 1 confirms the inventory status of products (Step 20) and presents the product information (the inventory quantity for each product type) of the selected lottery box (Step 6).
4. When a selection-waiting request for a lottery box is made from the terminal 2 and the screen transitions to the waiting screen (the inventory quantity for each product type) of the selected lottery box (Step 7), the product providing device 1 confirms the inventory status of products (Step 20) and presents the waiting screen (the inventory quantity for each product type) of the selected lottery box (Step 8).
5. When a waiting state is released in a determination on releasing selection of a lottery box and the screen transitions to the screen with the product information (the inventory quantity for each product type) of the lottery box for which the waiting state has been released (Step 21), the product providing device 1 confirms the inventory status of products (Step 20), and presents the product information (the inventory quantity for each product type) of the lottery box for which the waiting state has been released (Step 9).
6. When a request to transition to the lottery ticket purchase screen is made from the terminal 2 and the screen transitions to the lottery ticket purchase screen (Step 10), the product providing device 1 confirms the inventory status of products (Step 20), and presents the lottery ticket purchase screen including the remaining quantity of lottery tickets of the lottery box (Step 11).
7. When a request for the lottery ticket list screen is made from the terminal 2 and the screen transitions to the lottery ticket list screen (Step 12), the product providing device 1 confirms the inventory status of products (Step 20), and presents the lottery ticket list screen including an opening status of each lottery ticket (Step 13).

An occurrence of the above-described screen transition is caused by a user's action (operation), except for releasing the selection of the lottery box in the waiting state (Step 21). In this way, by presenting the inventory status each time the screen transitions, it is possible to accurately convey, to the user, the information on the quantity of remaining lottery tickets in the lottery box or the product inventory quantity.

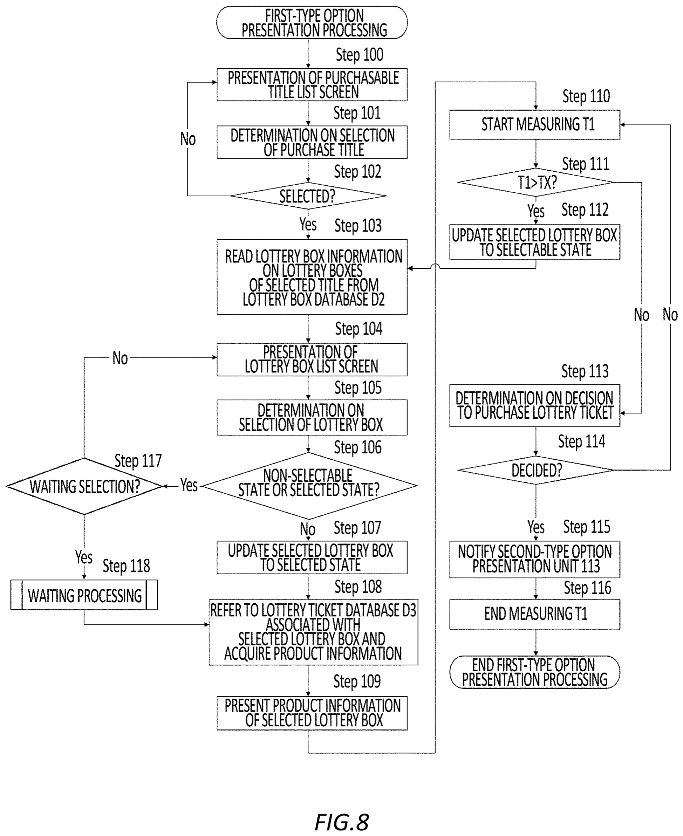

Next, an operation of the product providing device 1 will be described. Fig. 8 is an operation flowchart of first-type option presentation processing of the product providing device 1.

First, the user accesses the product providing device 1 by using the terminal 2 and makes a request for transition to a product purchase screen.

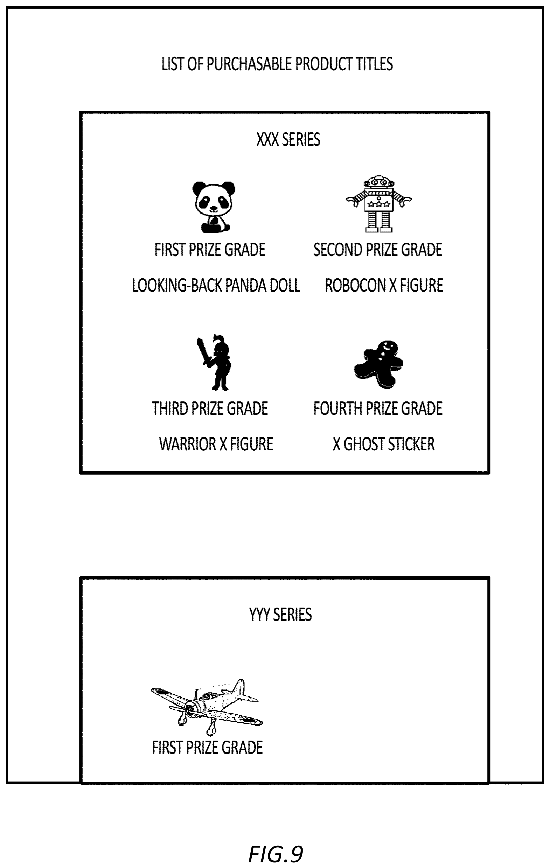

The first-type option presentation unit 112 of the product providing device 1 that has received the request for transition to the product purchase screen confirms the inventory status of the inventory database D1 of each title and presents a purchasable title list screen to the terminal 2 (Step 100). Fig. 9 is an example of the purchasable title list screen presented on the terminal 2. On the purchasable title list screen, for each title, a description of types of products belonging to a product group associated with the title is also displayed. Note that a title that has no available inventory and is unavailable for purchase is not displayed, but can also be displayed. In this case, the title unavailable for purchase is set to be non-selectable. The user selects a title they wish to purchase. In the present example, it is assumed that the user selects a title "XXX series".

The first-type option presentation unit 112 performs a determination on selection of a purchase title (Step 101), and if the purchase title is selected (Step 102), reads lottery box information from the lottery box database D2 of the inventory data D1 of the selected title (Step 103). That is, the first-type option presentation unit 112 confirms the inventory status of products upon transitioning to the lottery box list screen. The lottery box information is the lottery box ID, the quantity of remaining lottery tickets, and the selection state information of the lottery box.

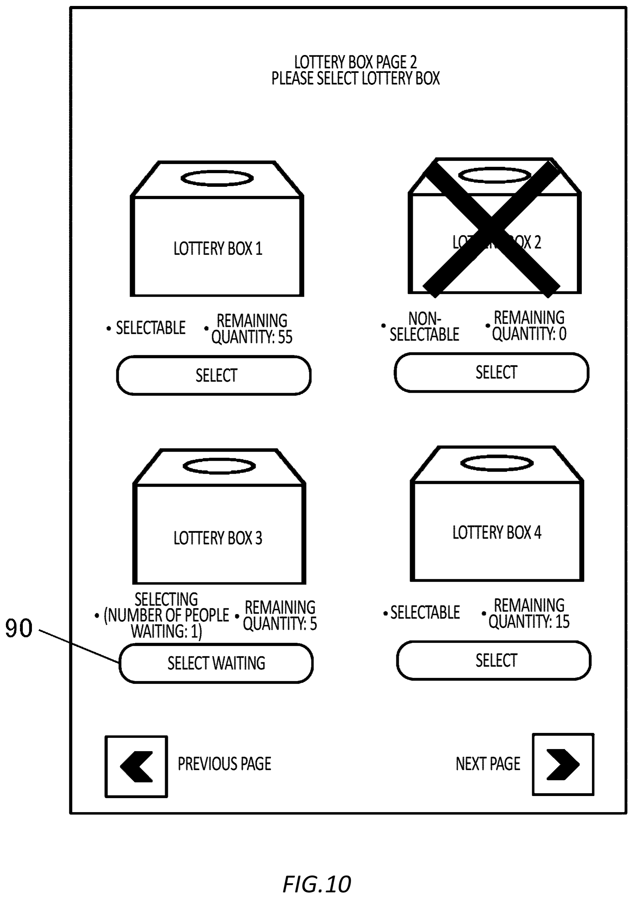

The first-type option presentation unit 112 presents the lottery box list screen on the terminal 2 by using the read lottery box information (Step 104). The first-type option presentation unit 112 also presents, for each lottery box, the state of the lottery box (selectable state, non-selectable state, selected state) and the quantity of remaining lottery tickets in the lottery box. Fig. 10 is an example of the lottery box list screen presented on the terminal 2. The example of Fig. 10 is an example in which the lottery boxes 1 to 4 among the lottery boxes 1 to 10 with the title "XXX series" are displayed. When the user browses the lottery box 5 and the subsequent boxes, the user can browse the boxes by selecting a next page. At this time, for each page transition, the lottery box information of the lottery box on that page is acquired. This is because the inventory status of products may change before the transition to a different page.

Each of the lottery boxes 1 to 4 presents the state of the lottery box (selectable state, non-selectable state, selected state) and the quantity of remaining lottery tickets in the lottery box. For example, the lottery box 1 is in the selectable state, and the quantity of remaining lottery tickets is 55. The lottery box 2 is in the non-selectable state, and the quantity of remaining lottery tickets is zero. The lottery box 3 is in the selected state, and the quantity of remaining lottery tickets is five. The lottery box 4 is in the selectable state, and the quantity of remaining lottery tickets is 15. In addition, in the selected state in which the lottery box 3 is selected, the user can wait for selection of that lottery box by selecting the selection-waiting button 90.

The user selects a desired lottery box from the lottery boxes displayed on the terminal 2. The first-type option presentation unit 112 performs a determination on selection of a lottery box (Step 105). If the selected lottery box is in the non-selectable state or the selected state (Step 106), the first-type option presentation unit 112 determines whether it is a waiting selection for the lottery box (Step 117), and if it is the waiting selection of the lottery box, the first-type option presentation unit 112 performs waiting processing (Step 118). The waiting processing (Step 118) will be described later. If it is not the waiting selection of the lottery box, the first-type option presentation unit 112 returns to Step 104 and waits for selection of a new lottery box. On the other hand, if the selected lottery box is in the selectable state (Step 106), the first-type option presentation unit 112 updates the selection state information of the lottery box ID of the lottery box to the selected state in the lottery box database D2 (Step 107).

Upon transitioning to the inventory status display screen for each product type of the selected lottery box, the first-type option presentation unit 112 refers to the lottery ticket database D3 associated with the selected lottery box and acquires the product information (Step 108). That is, the first-type option presentation unit 112 confirms the inventory status of products. The acquired product information is a type of a product and a quantity of remaining lottery tickets for each product type. The first-type option presentation unit 112 can obtain a current quantity of remaining lottery tickets for each product type by counting lottery tickets having an opening state of "0" for each product ID.

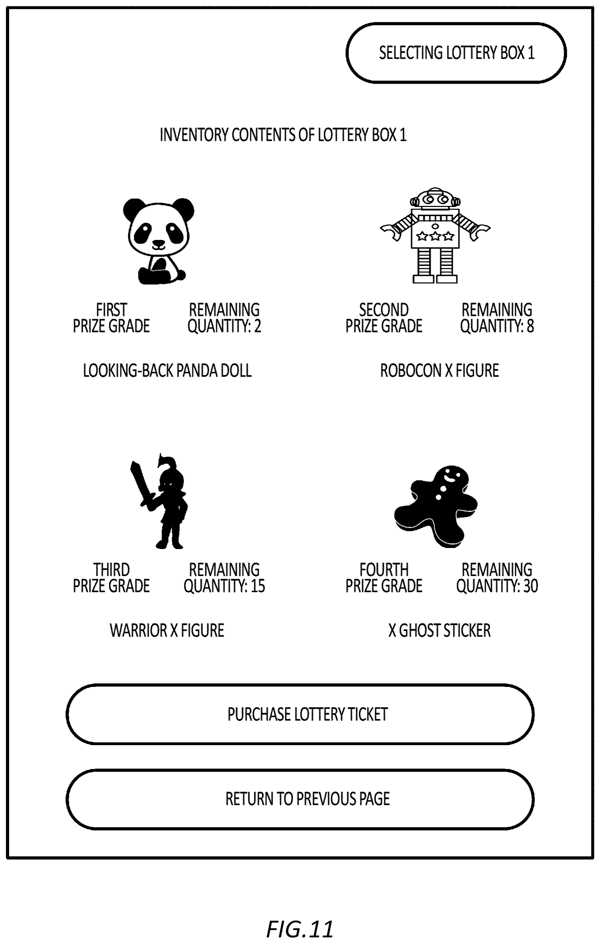

The first-type option presentation unit 112 presents the product information of the selected lottery box on the terminal 2 (Step 109). Fig. 11 is an example of the inventory status display screen (product information) of the lottery box 1 presented on the terminal 2 when the user selects the lottery box 1. In the example of Fig. 11, it is displayed that the lottery box 1 contains two lottery tickets for "Looking-Back Panda Doll" as the first prize grade, eight lottery tickets for "Robocon X Figure" as the second prize grade, 15 lottery tickets for "Warrior X Figure" as the third prize grade, and 30 lottery tickets for "X Ghost Sticker" as the fourth prize grade. In addition, a lottery ticket purchase decision button for purchasing a lottery ticket of the lottery box of the displayed product information is also displayed in the product information.

When presenting the inventory status display screen (product information) of the lottery box to the terminal 2, the first-type option presentation unit 112 starts measuring the time T1 (Step 110). Here, the time T1 is a time from presentation of the product information of the lottery box to decision of a reserved quantity of lottery tickets to be purchased for that lottery box.

The first-type option presentation unit 112 determines whether or not the time T1 exceeds the predetermined time TX (Step 111). If the time T1 exceeds the time TX, the first-type option presentation unit 112 updates the selected lottery box (the lottery box displaying the product information) from the selected state to the selectable state (Step 112), reads the lottery box information from the lottery box database D2 (Step 103), and returns the screen of the terminal 2 to the lottery box list screen (Step 104). That is, upon transitioning from the inventory status display screen (product information) to the lottery box list screen, the inventory status of products is confirmed, and the lottery box list screen with the latest inventory status is presented.

If the time T1 does not exceed the time TX, the first-type option presentation unit 112 performs a determination on decision to purchase the lottery ticket in the selected lottery box (Step 113). If it is decided to purchase the lottery ticket in the selected lottery box (Step 114), the first-type option presentation unit 112 notifies the second-type option presentation unit 113 of the fact (Step 115), and ends measuring the time T1 (Step 116).

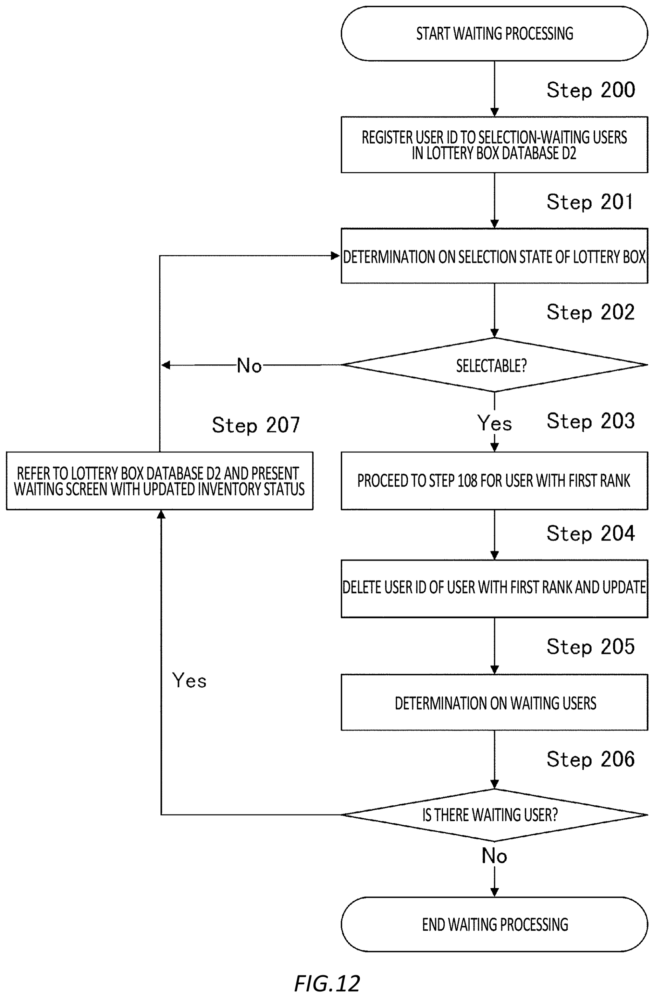

Subsequently, the waiting processing (Step 118) will be described. Fig. 12 is an operation flowchart of the waiting processing (Step 118).

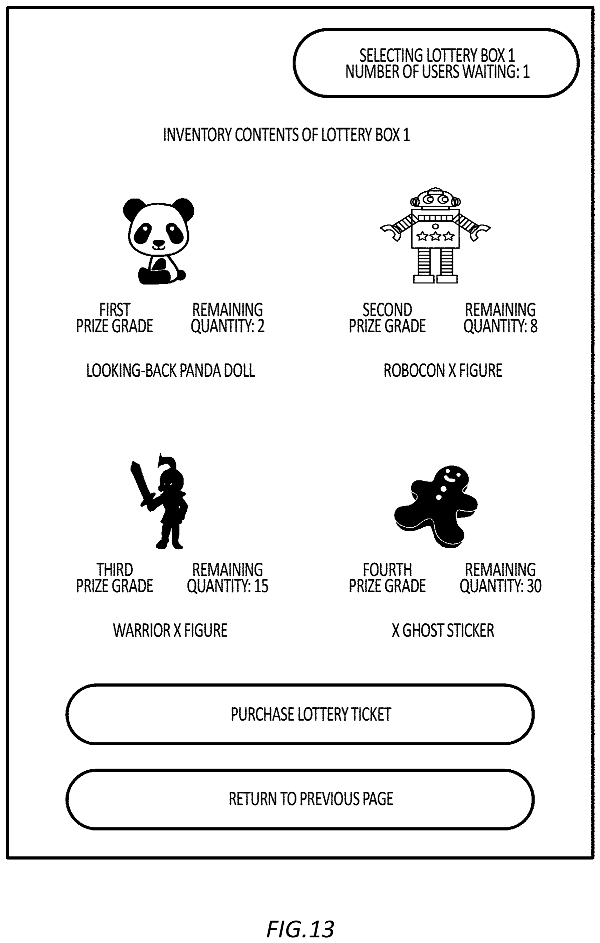

The first-type option presentation unit 112 additionally writes the user ID of the user who has selected to wait to the selection-waiting user for the lottery box in the lottery box database D2 (Step 200). Fig. 13 is an example of the product information on the waiting screen for the lottery box 1 presented to the user who has selected to wait. As illustrated in Fig. 13, it is displayed that the selection of the lottery box is currently waiting.

The first-type option presentation unit 112 performs a determination on the selection state of the lottery box (Step 201). If the lottery box is in the selected state (being selected) (Step 202), the first-type option presentation unit 112 continues the determination on the selection state of the lottery box (Step 201).

On the other hand, if the selected state of the lottery box is updated to be selectable (Step 202), for a user having a user ID with a first rank among user IDs registered as the selection-waiting users for the lottery box in the lottery box database D2, the first-type option presentation unit 112 proceeds to Step 108 and continues the processing (Step 203). Then, the first-type option presentation unit 112 deletes the user ID with the first rank from the selection-waiting users for the lottery box in the lottery box database D2 and updates the lottery box database D2 (Step 204). Then, when transitioning to the waiting screen for the lottery box 1 in which a number of waiting people has decreased, the first-type option presentation unit 112 refers to the lottery box database D2 and presents the waiting screen with a latest number of waiting people and latest inventory status (Step 207).

Subsequently, the first-type option presentation unit 112 makes a determination on the selection-waiting users for the lottery box in the lottery box database D2 (Step 205). If the user ID exists in the selection-waiting users for the lottery box in the lottery box database D2, the first-type option presentation unit 112 returns to Step 201 and continues the processing. On the other hand, if the user **ID** does not exist in the selection-waiting users for the lottery box in the lottery box database D2, the first-type option presentation unit 112 ends the waiting processing.

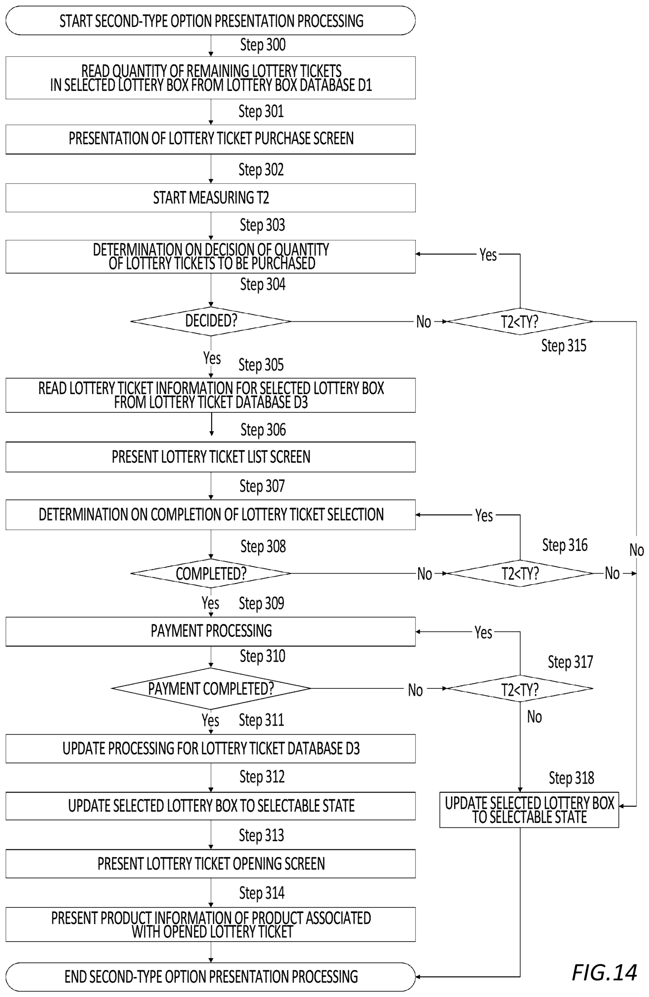

Next, second-type option presentation processing will be described. Fig. 14 is an operation flowchart of the second-type option presentation processing of the product providing device 1.

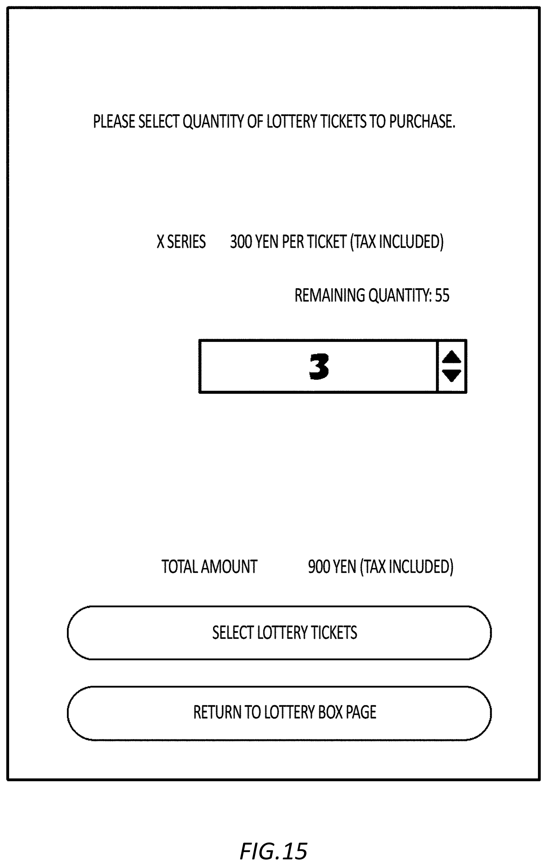

First, upon transitioning to the lottery ticket purchase screen, the second-type option presentation unit 113 reads the quantity of remaining lottery tickets in the selected lottery box from the lottery box database D2 (Step 300). That is, the second-type option presentation unit 113 confirms the inventory status of products. The lottery ticket information to be read is a quantity of remaining unopened lottery tickets. The second-type option presentation unit 113 presents a lottery ticket purchase screen including the remaining quantity of lottery tickets to the terminal 2 (Step 301). Fig. 15 is an example of the lottery ticket purchase screen displayed on the terminal 2. The user inputs, through the lottery ticket purchase screen, the quantity of lottery tickets to be reserved for purchase.

When presenting the lottery ticket purchase screen on the terminal 2, the second-type option presentation unit 113 starts measuring the time T2 (Step 302). Here, the time T2 is a time from the presentation of the lottery ticket purchase screen to completion of payment for the purchase of the lottery ticket.

The second-type option presentation unit 113 performs a determination on decision of a reserved quantity of lottery tickets to be purchased (Step 303). If the reserved quantity of lottery tickets to be purchased is decided (Step 304), the second-type option presentation unit 113 reads the lottery ticket information of the selected lottery box from the lottery ticket database D3 (Step 305). That is, upon transitioning to the lottery ticket list screen, the second-type option presentation unit 113 confirms the inventory status of products. The lottery ticket information to be read is the lottery ticket ID and opening information.

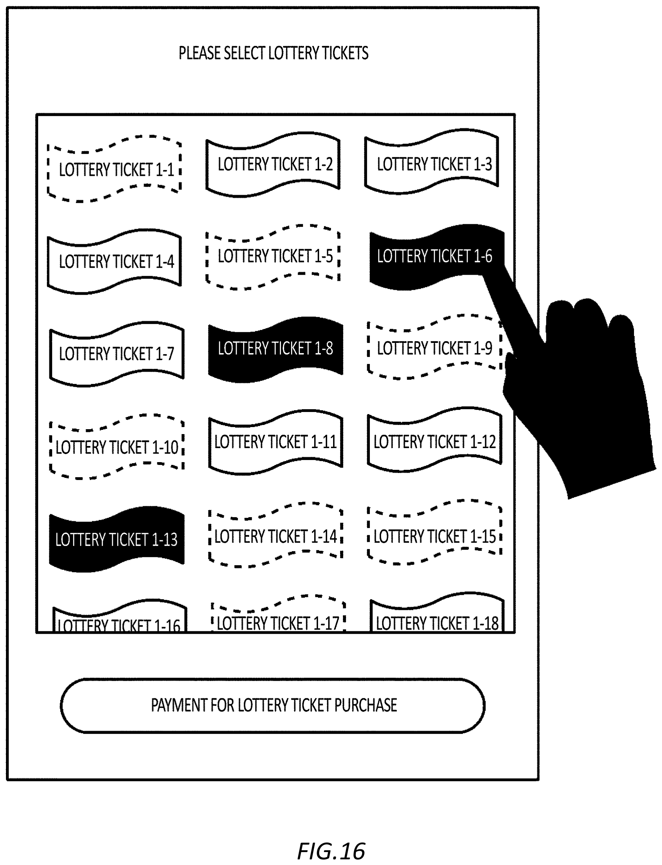

The second-type option presentation unit 113 presents the lottery ticket list screen for the selected lottery box to the terminal 2 (Step 306). Fig. 16 is an example of the lottery ticket list screen for the selected lottery box displayed on the terminal 2. On the lottery ticket list screen of Fig. 16, images of lottery tickets with already opened lottery ticket IDs are displayed by dotted lines, and selectable lottery tickets are displayed by solid lines. The user can select as many lottery tickets as the quantity reserved for purchase, from among the selectable lottery tickets.

On the other hand, if the reserved quantity of lottery tickets to be purchased is not decided, the second-type option presentation unit 113 determines whether or not the time T2 exceeds the predetermined time TY (Step 315). If the time T2 exceeds the time TY, the second-type option presentation unit 113 updates the selected lottery box from the selected state to the selectable state (Step 318) and stops the processing. If the time T2 does not exceed the time TY, the second-type option presentation unit 113 returns to Step 304 and continues the processing.

Subsequently, the second-type option presentation unit 113 determines whether the selection of the lottery ticket is completed on the lottery ticket list screen (Step 307). If the selection of the lottery ticket is not completed (Step 308), the second-type option presentation unit 113 determines whether or not the time T2 exceeds the predetermined time TY (Step 316). If the time T2 exceeds the time TY, the second-type option presentation unit 113 updates the selected lottery box from the selected state to the selectable state (Step 318) and stops the processing. If the time T2 does not exceed the time TY, the second-type option presentation unit 113 returns to Step 307 and continues the processing.

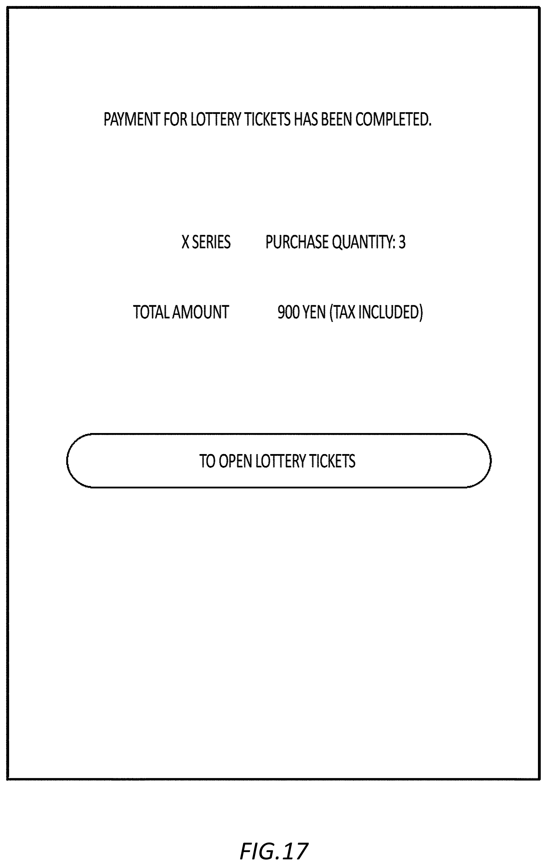

On the other hand, if the selection of the lottery ticket by the user is completed (Step 308), the payment processing unit 114 performs payment processing for the purchase of the lottery ticket (Step 309). Fig. 17 is an example of a payment processing completion screen.

Upon completion of the payment processing (Step 310), for the lottery ticket for which selection is completed, the inventory management unit 116 writes a flag of "1" in the opening information of its lottery ticket ID, and updates the lottery ticket database D3 (Step 311). In addition, the second-type option presentation unit 113 changes the selection state information of the selected lottery box from selected to selectable and updates the lottery box database D2 (Step 312).

Accordingly, the lottery box that was in the selected state by the user enters the selectable state where the lottery box is selectable by another user, whereby another user can select the lottery box. In addition, since, at the time of payment, the selected lottery ticket is confirmed and the product associated with that lottery ticket is also confirmed, information on remaining lottery tickets and the inventory status of products can be accurately conveyed to a next user who has selected that lottery box, and the already opened lottery ticket is not selected by another user.

On the other hand, when the payment processing of the payment processing unit 114 is not completed (Step 310), the second-type option presentation unit 113 determines whether or not the time T2 exceeds the predetermined time TY (Step 316). If the time T2 exceeds the time TY, the second-type option presentation unit 113 updates the selection state information of the selected lottery box from selected to selectable (Step 318), and stops the processing. If the time T2 does not exceed the time TY, the second-type option presentation unit 113 returns to Step 309 and continues the processing.

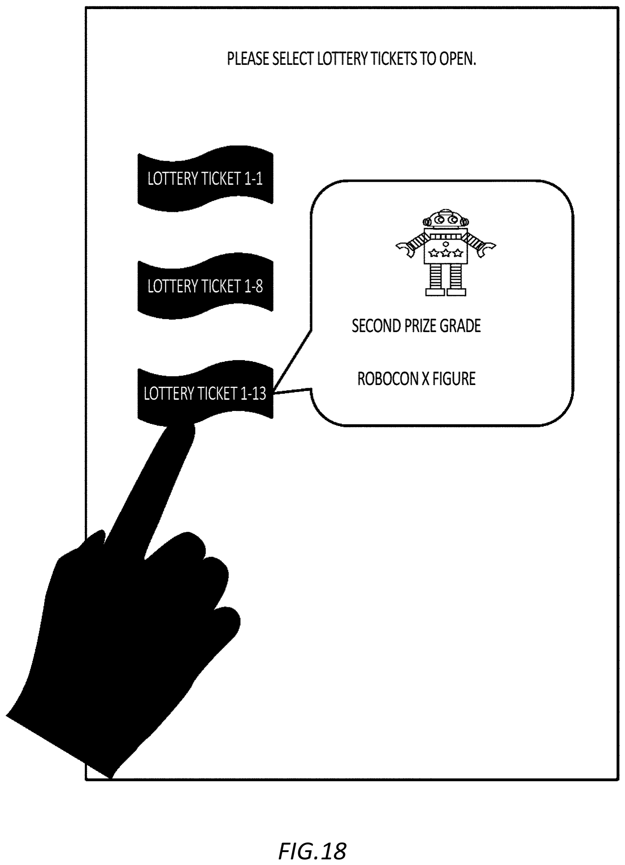

When the payment processing of the payment processing unit 114 is completed (Step 310) and the update of the lottery ticket database D3 by the inventory management unit 116 is completed (Steps 311 and 312), the product providing unit 115 presents the lottery ticket opening screen (Step 313) and presents the product information of the product associated with the opened lottery ticket (Step 314). Fig. 18 is an example of the lottery ticket opening screen displayed on the terminal 2. By selecting the lottery ticket to be opened, the user can browse the product information of the product associated with that lottery ticket.

A product providing method applied to the present embodiment is to provide a product in a lottery box format. Therefore, it is necessary to accurately convey the current inventory status of products to the user. Since the present embodiment is configured to confirm the inventory status of products for each transition of the screen to be presented to the user, it is possible to accurately convey, to the user, the information on the quantity of remaining lottery tickets in the lottery box or the product inventory quantity.

In addition, even for the lottery box in the waiting state, it is configured to confirm the current inventory status of products when the user is released and the screen transitions to a new waiting screen, thereby allowing the user to know the inventory status of products even while waiting.

In addition, since one product is associated with the lottery ticket and the inventory status is updated when the lottery ticket is opened, the information on remaining lottery tickets and products can be accurately conveyed to the next user who selects that lottery box, and it is possible to prevent provision of duplicate products.

In addition, in the case of providing a product in the lottery box format, the lottery box needs to be selectable by only one user. On the other hand, it is not preferable that one user exclusively select the lottery box. In the present embodiment, the lottery box is configured to be selectable by only one user, the payment for the purchase of the lottery ticket is made after the selection of the lottery ticket by the user is completed, and then an opening operation of the lottery ticket is performed, so that it is possible to shorten a time for which the selection of the lottery box needs to be maintained for one user.

### <Modification of Embodiment of Present Invention>

Adopting product provision with a high level of amusement is advantageous for a user and a product provider. Therefore, in a modification of the embodiment of the present invention, an example will be described in which a bonus is given to a user who has selected a last lottery ticket remaining in the lottery box.

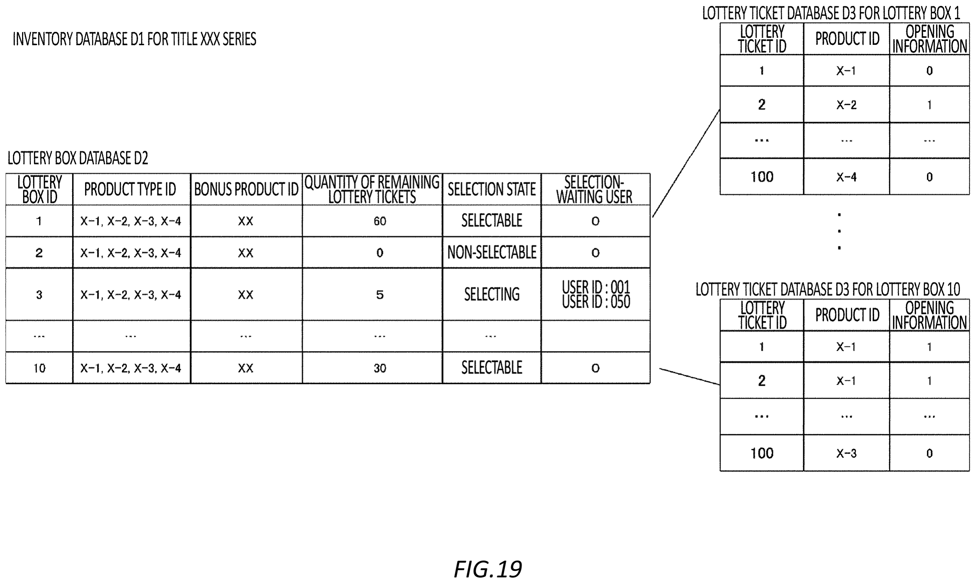

Fig. 19 is a diagram illustrating an example of the inventory database D1 according to the modification of the embodiment of the present invention. In the example of Fig. 19, a product XX, which is a bonus product to be given to the user who has selected the last lottery ticket remaining in the lottery box, is described for each lottery box.

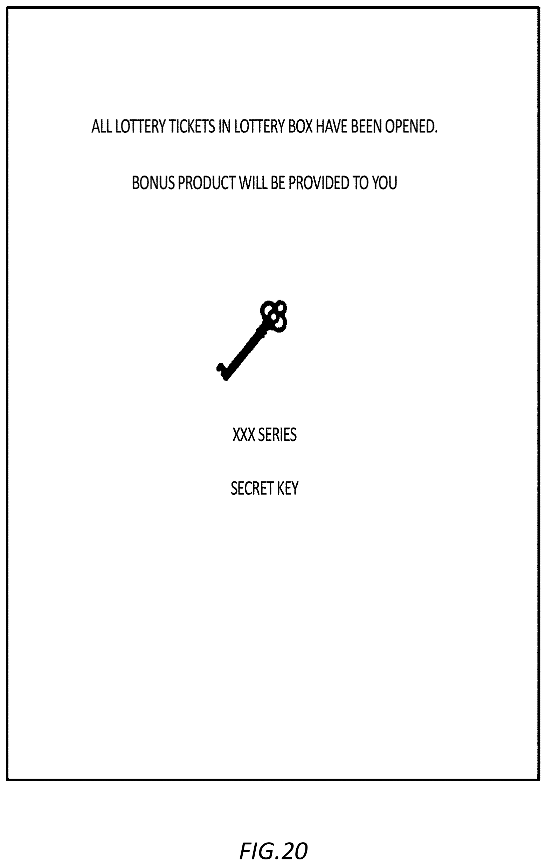

Every time the lottery ticket is opened, the product providing unit 115 refers to the opening state of the lottery ticket in the lottery ticket database D3, and when all the lottery tickets in the lottery ticket database D3 have been opened, the product providing unit 115 provides the bonus product of the lottery box to the user who has selected the last lottery ticket. That is, the lottery ticket inventory status is confirmed for each action (operation) of the user. Fig. 20 is an example of a bonus product provision screen displayed on the terminal 2 by the product providing unit 115. With such a configuration, it is possible to provide a product providing system with a high level of amusement.

Although the present invention has been described above with reference to preferred embodiments, the present invention is not necessarily limited to the above-described embodiments, and various modifications and implementations can be made within the scope of the technical idea.

In addition, a part or an entirety of the above-described embodiments is described as in the following supplementary notes, but is not limited to the following.

### (Supplementary Note 1)

A product providing device capable of communicating with a terminal of a user, including:
a first-type option presentation means which presents, to a terminal, a plurality of first-type options each associated with a product group composed of a plurality of products, to be selectable by a user; and
an inventory management means which manages an inventory status of products of a product group associated with each first-type option of the plurality of first-type options, in which
the first-type option presentation means confirms an inventory status of products of a product group associated with the first-type option and presents the inventory status of products for each screen transition.

### (Supplementary Note 2)

The product providing device according to supplementary note 1, in which
the first-type option presentation means presents a screen after a transition on condition of an operation by the user.

### (Supplementary Note 3)

The product providing device according to supplementary note 1 or 2, in which
the transition of the screen is at least one of a transition to a presentation screen for the plurality of first-type options by the first-type option presentation means or a screen transition due to selection of any of the plurality of first-type options by a user.

### (Supplementary Note 4)

The product providing device according to any one of supplementary notes 1 to 3, in which
when presentation of the first-type option is divided into a plurality of screens, the first-type option presentation means confirms an inventory status of products of a product group associated with the first-type option and presents the inventory status of products for each transition of the screens.

### (Supplementary Note 5)

The product providing device according to any one of supplementary notes 1 to 4, in which
the first-type option presentation means
enables selection of one first-type option only for one user,
presents each first-type option in any one mode of a selectable state, a selected state, or a non-selectable state, and
presents a selected first-type option in a mode of the selected state until selection of the first-type option is released.

### (Supplementary Note 6)

The product providing device according to any one of supplementary notes 1 to 5, in which
the first-type option presentation means presents a first-type option in a mode of the selectable state or the selected state on condition that at least one of a plurality of second-type options associated with the first-type option is selectable, and presents the first-type option in a mode of the non-selectable state on condition that all of the plurality of second-type options associated with the first-type option are non-selectable.

### (Supplementary Note 7)

The product providing device according to any one of supplementary notes 1 to 6, in which
the first-type option presentation means
regarding a first-type option presented in a mode of the selected state, performs control to enable a user to wait for selection of the first-type option, so that the user is able to select the first-type option with priority after selection of the first-type option is released, and
regarding a first-type option presented in a mode of the selected state, upon transitioning to a waiting screen due to a user selecting to wait for the first-type option, confirms an inventory status of products of a product group associated with the first-type option and presents the inventory status of products.

### (Supplementary Note 8)

The product providing device according to any one of supplementary notes 1 to 7, including
a second-type option presentation means which presents, to the terminal, a plurality of second-type options associated with a first-type option selected by a user among the plurality of first-type options, to be selectable by the user, in which
upon transitioning to a presentation screen for the plurality of second-type options, the second-type option presentation means confirms an inventory status of products associated with the second-type options, and presents the second-type options reflecting the inventory status.

### (Supplementary Note 9)

The product providing device according to any one of supplementary notes 1 to 8, in which
upon transitioning to a selection screen for a selection quantity of the second-type options, the second-type option presentation means confirms an inventory status of products associated with the second-type options and presents the selection screen reflecting the inventory status.

### (Supplementary Note 10)

The product providing device according to any one of supplementary notes 1 to 9, in which
the second-type option presentation means releases selection of the first-type option on condition that payment corresponding to the selection quantity of the second-type options on the selection screen has been completed.

### (Supplementary Note 11)

The product providing device according to any one of supplementary notes 1 to 10, including
a product providing means which presents, to the terminal, product information of a product associated with a second-type option selected by a user.

### (Supplementary Note 12)

The product providing device according to any one of supplementary notes 1 to 11, in which
the first-type option is an image imitating a lottery box.

### (Supplementary Note 13)

The product providing device according to any one of supplementary notes 1 to 12, in which
the second-type option is an image imitating a lottery ticket.

### (Supplementary Note 14)

A program which causes a computer to function as:
a first-type option presentation means which presents, to a terminal, a plurality of first-type options each associated with a product group composed of a plurality of products, to be selectable by a user; and
an inventory management means which manages an inventory status of products of a product group associated with each first-type option of the plurality of first-type options, in which
the first-type option presentation means confirms an inventory status of products of a product group associated with the first-type option and presents the inventory status of products for each screen transition.

### (Supplementary Note 15)

A product providing system including:
a first-type option presentation means which presents, to a terminal, a plurality of first-type options each associated with a product group composed of a plurality of products, to be selectable by a user; and
an inventory management means which manages an inventory status of products of a product group associated with each first-type option of the plurality of first-type options, in which
the first-type option presentation means confirms an inventory status of products of a product group associated with the first-type option and presents the inventory status of products for each screen transition.

### EXPLANATION OF REFERENCES

1: product providing device;
2: terminal;
10: processing unit;
11: communication unit;
12: storage unit;
111: user information management unit;
112: first-type option presentation unit;
113: second-type option presentation unit;
114: payment processing unit;
115: product providing unit; and
116: inventory management unit.

## Claims

1. A product providing device capable of communicating with a terminal of a user, comprising:
a first-type option presentation means which presents, to a terminal, a plurality of first-type options each associated with a product group composed of a plurality of products, to be selectable by a user; and
an inventory management means which manages an inventory status of products of a product group associated with each first-type option of the plurality of first-type options, wherein
the first-type option presentation means confirms an inventory status of products of a product group associated with the first-type option and presents the inventory status of products for each screen transition.

2. The product providing device according to claim 1, wherein
the first-type option presentation means presents a screen after a transition on condition of an operation by the user.

3. The product providing device according to claim 1 or 2, wherein
the transition of the screen is at least one of a transition to a presentation screen for the plurality of first-type options by the first-type option presentation means or a screen transition due to selection of any of the plurality of first-type options by a user.

4. The product providing device according to any one of claims 1 to 3, wherein
when presentation of the first-type option is divided into a plurality of screens, the first-type option presentation means confirms an inventory status of products of a product group associated with the first-type option and presents the inventory status of products for each transition of the screens.

5. The product providing device according to any one of claims 1 to 4, wherein
the first-type option presentation means
enables selection of one first-type option only for one user,
presents each first-type option in any one mode of a selectable state, a selected state, or a non-selectable state, and
presents a selected first-type option in a mode of the selected state until selection of the first-type option is released.

6. The product providing device according to claim 5, wherein
the first-type option presentation means presents a first-type option in a mode of the selectable state or the selected state on condition that at least one of a plurality of second-type options associated with the first-type option is selectable, and presents the first-type option in a mode of the non-selectable state on condition that all of the plurality of second-type options associated with the first-type option are non-selectable.

7. The product providing device according to claim 5 or 6, wherein
the first-type option presentation means
regarding a first-type option presented in a mode of the selected state, performs control to enable a user to wait for selection of the first-type option, so that the user is able to select the first-type option with priority after selection of the first-type option is released, and
regarding a first-type option presented in a mode of the selected state, upon transitioning to a waiting screen due to a user selecting to wait for the first-type option, confirms an inventory status of products of a product group associated with the first-type option and presents the inventory status of products.

8. The product providing device according to any one of claims 5 to 7, comprising
a second-type option presentation means which presents, to the terminal, a plurality of second-type options associated with a first-type option selected by a user among the plurality of first-type options, to be selectable by the user, wherein
upon transitioning to a presentation screen for the plurality of second-type options, the second-type option presentation means confirms an inventory status of products associated with the second-type options, and presents the second-type options reflecting the inventory status.

9. The product providing device according to claim 8, wherein
upon transitioning to a selection screen for a selection quantity of the second-type options, the second-type option presentation means confirms an inventory status of products associated with the second-type options and presents the selection screen reflecting the inventory status.

10. The product providing device according to claim 9, wherein
the second-type option presentation means releases selection of the first-type option on condition that payment corresponding to the selection quantity of the second-type options on the selection screen has been completed.

11. The product providing device according to any one of claims 8 to 10, comprising
a product providing means which presents, to the terminal, product information of a product associated with a second-type option selected by a user.

12. The product providing device according to any one of claims 1 to 11, wherein
the first-type option is an image imitating a lottery box.

13. The product providing device according to any one of claims 8 to 12, wherein
the second-type option is an image imitating a lottery ticket.

14. A program which causes a computer to function as:
a first-type option presentation means which presents, to a terminal, a plurality of first-type options each associated with a product group composed of a plurality of products, to be selectable by a user; and
an inventory management means which manages an inventory status of products of a product group associated with each first-type option of the plurality of first-type options, wherein
the first-type option presentation means confirms an inventory status of products of a product group associated with the first-type option and presents the inventory status of products for each screen transition.

15. A product providing system comprising:
a first-type option presentation means which presents, to a terminal, a plurality of first-type options each associated with a product group composed of a plurality of products, to be selectable by a user; and
an inventory management means which manages an inventory status of products of a product group associated with each first-type option of the plurality of first-type options, wherein
the first-type option presentation means confirms an inventory status of products of a product group associated with the first-type option and presents the inventory status of products for each screen transition.
